# FASCICULE DE BREVET EUROPEEN

(11) **EP 0 521 035 B1**
(45) Date de publication et mention de la délivrance du brevet: **29.06.1994**
(21) Numéro de dépôt: 91906079.8
(22) Date de dépôt: 11.03.1991
(51) Int. Cl.: F16H 21/04

(54) **DISPOSITIF DE GUIDAGE D'UN MOUVEMENT**
EINRICHTUNG ZUR FÜHRUNG EINER BEWEGUNG
DEVICE FOR GUIDING A MOVEMENT

(30) Priorité: 19.03.1990 FR 9003699
(43) Date de publication de la demande: 07.01.1993
(73) Titulaire: KODAK-PATHE, F-75594 Paris Cedex 12 (FR); EASTMAN KODAK COMPANY, Rochester, New York 14650-2201 (US)
(72) Inventeur: LONG, Michael, F-71102 Châlon-sur-Saône Cédex (FR)
(74) Mandataire: Buff, Michel
(86) Numéro de dépôt international: FR9100193
(87) Numéro de publication internationale: WO9114885

(56) Documents cités:
- EP-A- 6 088
- AT-A- 345 042
- GB-A- 856 345
- US-A- 3 102 721

## Description

L'invention concerne un dispositif permettant d'empêcher tout mouvement relatif de translation dans un premier plan entre deux éléments pouvant se déplacer l'un par rapport à l'autre dans un second plan sensiblement perpendiculaire au premier.

Dans le domaine des produits en bande, lorsqu'il est nécessaire de réaliser une opération selon un pas déterminé, telle qu'une opération de perforation, de poinçonnage, d'emboutissage, de piquage, il est parfois nécessaire d'avoir une très grande précision dans le positionnement de l'outil réalisant l'opération considérée.

Ainsi, dans la demande de brevet déposée ce même jour par la demanderesse, intitulée "dispositif pour réaliser sur une bande, une opération selon un pas déterminé", il est décrit un dispositif permettant de réaliser une opération, selon un pas déterminé, sur une bande se déplaçant de manière uniforme et continue, comprenant un premier bloc muni d'un outil, décrivant de manière alternative, une courte portion d'arc de cercle autour d'un axe horizontal fixe parallèle à l'axe de défilement de la bande de façon à pouvoir faire coopérer périodiquement ledit outil avec un organe complémentaire dudit outil, porté par un second bloc, ledit premier bloc étant relié audit second bloc au niveau dudit axe fixe, les deux blocs ainsi fixés et suspendus à un chassis fixe étant animés parallèlement au plan de défilement de ladite bande d'un mouvement de va-et-vient d'amplitude supérieure à celle du mouvement du premier bloc autour dudit axe fixe et de période identique.

Un tel dispositif, notamment lorsqu'il est appliqué à la perforation, nécessite qu'il n'y ait aucun mouvement de translation, dans le plan de défilement de la bande, d'un des blocs par rapport à l'autre.

Dans la technique antérieure, il est connu d'utiliser des mécanismes du type "mécanisme de SCOTT-RUSSELL" dont on reparlera plus en détail dans la description qui suit et qui comportent un certain nombre d'articulations, de pivots ou de glissières. Ces mécanismes présentent une usure assez rapide, générant dans le positionnement de l'outil des imprécisions de plus en plus grandes. De plus, de tels mécanismes peuvent difficilement être utilisés lorsque le second plan (c'est-à-dire la courte portion d'arc de cercle) n'est pas éxactement perpendiculaire au premier plan (c'est-à-dire au plan de la bande). Un tel mécanisme est monté à la figure 1 du présent brevet et est généralement connu de l'homme de l'art.

Aussi est-ce un des objets de la présente invention que de fournir un dispositif empêchant tout mouvement relatif de translation dans un premier plan entre deux éléments pouvant se déplacer l'un par rapport à l'autre dans un second plan sensiblement perpendiculaire au premier et ne présentant pas les inconvénients des dispositifs de la technique antérieure.

C'est encore un autre objet de la présente invention que de fournir un dispositif présentant l'avantage d'être sous une forme compacte.

D'autres objets apparaîtront au cours de la description détaillée qui va suivre.

Les objets de la présente invention sont atteints en réalisant un dispositif permettant d'empêcher tout mouvement relatif de translation dans un premier plan entre deux éléments se déplaçant l'un par rapport à l'autre dans un second plan sensiblement perpendiculaire au premier comprenant deux barres P₁P₄, P₂P₃ reliées entre elles en leur point milieu par un point de pivot C, les deux dites barres ayant l'une de leurs extrémités solidaire du premier élément en un point de pivot P₁, respectivement, en un point de pivot-glissière P₃, l'autre extrémité des deux dites barres étant solidaire du second élément en un point de pivot P₂, respectivement, en un point de pivot-glissière P₄, lesdits points P₁ et P₂ étant contenus dans ledit premier plan, les barres étant disposées de telle sorte que l'on ait P₁C = P₂C = P₃C = P₄C, le dispositif étant caractérisé en ce que les points de pivot et les points de pivot-glissière sont constitués de portions flexibles desdites barres.

L'invention sera décrite en détail en faisant référence aux planches de dessins annexés dans lesquels :
- la Fig. 1 représente de façon schématique un mécanisme du type mécanisme de SCOTT-RUSSELL ;
- la Fig. 2A représente de façon schématique le dispositif selon la présente invention en position "ouverte" ;
- la Fig. 2B représente de façon schématique le dispositif selon la présente invention en position de repos ;
- la Fig. 3 représente une vue en trois dimensions du dispositif selon la présente invention.

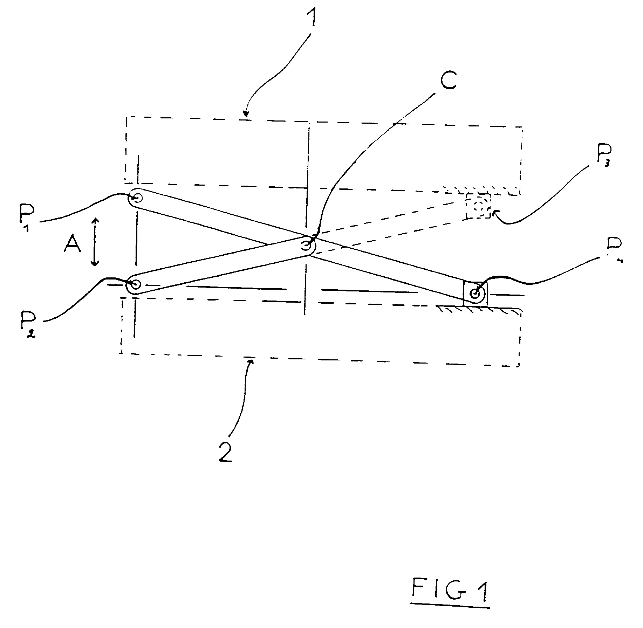

Le dispositif selon la présente invention est dérivé d'un mécanisme dit "mécanisme de SCOTT-RUSSELL". Ce mécanisme de SCOTT-RUSSELL correspond aux parties en traits continus de la Fig. 1. Il se présente globalement sous la forme d'un Y constitué de deux barres P₁CP₄ et P₂C. Une extrémité de la barre P₂C est reliée en un point de pivot C au milieu de la barre P₁CP₄. Les points P₁ et P₂ sont des points de pivot ; P₄ est un point de pivot glissière. La disposition des barres est telle que l'on ait la relation P₁C = P₂C = P₄C. Une telle disposition contraint le point P₁ à se déplacer selon une ligne droite par rapport au point P₂ perpendiculaire au plan porté par P₂ et P₄.

Ainsi lorsque l'on veut déplacer une surface parallèlement au plan porté par P₂P₄ dans le sens indiqué par la flèche A, il suffit de positionner deux tels mécanismes côte à côte. Une telle disposition présente l'inconvénient d'êtrelencombrante et de multiplier le nombre de pivots et de pivots-glissières, sujets à des problèmes d'usure assez rapide et donc d'imprécision assez grande dans le guidage du mouvement de la surface.

Une autre solution consiste, ainsi que représenté en traits interrompus à la Fig. 1, à prolonger la barre P₁C en P₁ P₃ de façon à avoir deux barres P₁ P₄ et P₂ P₃ reliées entre elles en leur point milieu par un point de pivot C. Les blocs représentés en traits interrompus (1), (2) représentent deux éléments entre lesquels il ne doit exister aucun mouvement relatif de translation parallèlement au plan porté par P₂ et P₄, lorsque ces deux dits éléments se déplacent l'un par rapport à l'autre dans un second plan perpendiculaire, au plan porté par P₂ et P₄. Les deux dites barres ont l'une de leurs extrémités solidaire du premier élément (1) en un point de pivot P₁, respectivement en un point de pivot-glissière P₃, l'autre extrémité des deux dites barres étant solidaire du second élément (2) en un point de pivot P₂ respectivement, en un point de pivot-glissière P₄. Les barres sont disposées de telle sorte que l'on ait P₁C = P₂C = P₃C = P₄C. Un tel dispositif présente un encombrement réduit par rapport au dispositif constitué de deux Y disposés côte à côte, évoqué précédemment, mais présente les mêmes inconvénients relatifs à la présence des pivots et pivots-glissières traditionnels.

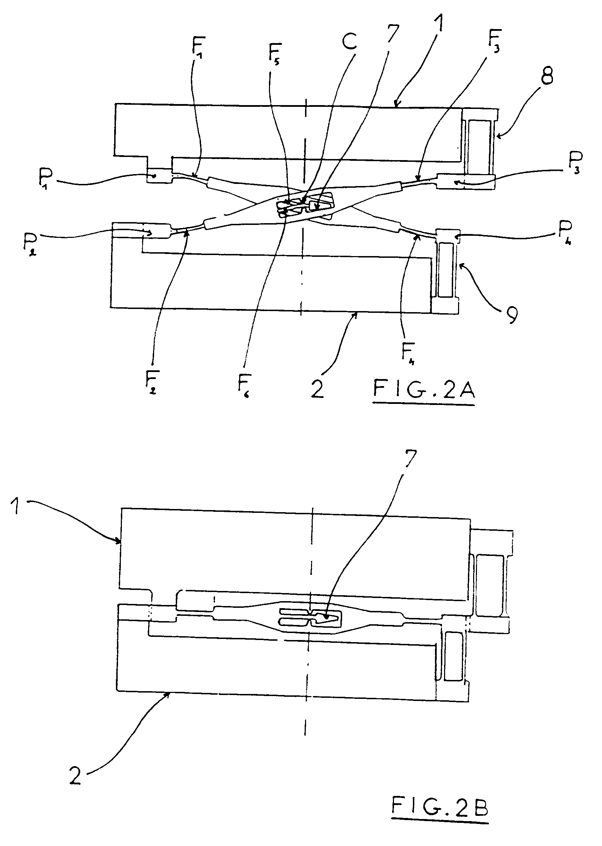

De plus, dans le cas de la demande de brevet déposée ce même jour par la demanderesse, intitulée "dispositif pour réaliser sur une bande, une opération selon un pas déterminé", le bloc portant l'outil décrit une courte portion d'arc de cercle autour d'un axe horizontal fixe. Le mouvement réalisé n'est donc pas dans un plan exactement perpendiculaire au plan de la bande. Pour cette raison, il n'est pas possible d'utiliser des pivots et pivots-glissières classiques tels que ceux décrits précédement. Ainsi que représenté en Fig. 2A, les articulations des points P₁, P₂, P₃, P₄, C sont remplacées par des éléments flexibles F₁ - F₆. Chacunes des deux barres P₁ P₄ et P₂ P₃ comportent en leur extrémités une zone de plus faible épaisseur permettant ainsi de leur conférer une certaine fléxibilité réalisant la fonction de pivot souhaitée en ces différents points. Les deux barres comportent également en leur partie centrale une zone de plus faible épaisseur sensiblement identique aux zones d'extrémités desdites barres, réalisant ainsi la fonction de pivot au point C. Selon un mode de réalisation, les deux barres P₁ P₄ et P₂ P₃ forment une seule pièce, la partie renforcée 7 constituant la partie commune aux deux dites barres. Les fonctions glissières aux point P₃ et P₄ sont réalisées également au moyen d'éléments flexibles (8), (9), disposés sur lesdits éléments (1), (2) de façon à permettre un mouvement sensiblement de translation des points P₃ et P₄.

Dans un tel système, le point C (jouant effectivement le rôle d'articulation du point C de le Fig. 1) se situe, par rapport à la partie renforcée 7, à une distance égale à environ 1/3 de la longueur des portions flexibles F₁-F₆.

Avec des éléments (8), (9) disposés tels que représentés en Fig. 2A les points P₃ et P₄ décrivent en réalité une courte portion d'arc de cercle qui peut, sur une courte distance, être assimilée à une translation. Ces éléments (8), (9) peuvent être supprimés lorsque le mouvement de glissière des points P₃ et P₄ est de très faible amplitude.

Selon un tel dispositif les déformations subies par les parties flexibles F₁-F₆ doivent être égales afin de préserver les relations géométriques nécessaires au mouvement souhaité de l'élément (1), à savoir P₁C = P₂C = P₃C = P₄C. Le dispositif selon la présente invention est réalisé en acier à ressorts et, de préférence, en acier ayant subi un traitement thermique spécial tel que l'acier MARAGING. Selon un mode de réalisation, la longueur des parties flexibles F₁-F₆ est de l'ordre de 11,5 mm pour une distance P₁P₃ = P₂P₄ = 40,5 mm.

L'épaisseur des parties flexibles F₁-F₆ est de l'ordre de 1 mm.

La Fig. 2A montre de façon exagérée le dispositif en position "ouverte" tandis que la Fig. 2B montre le même dispositif en position de repos. Selon un mode de réalisation, l'amplitude maximale du mouvement de glissière des points P₃, P₄ est de l'ordre de ± 15 »m pour un déplacement vertical des points P₁, P₃ de l'ordre de ± 2 mm.

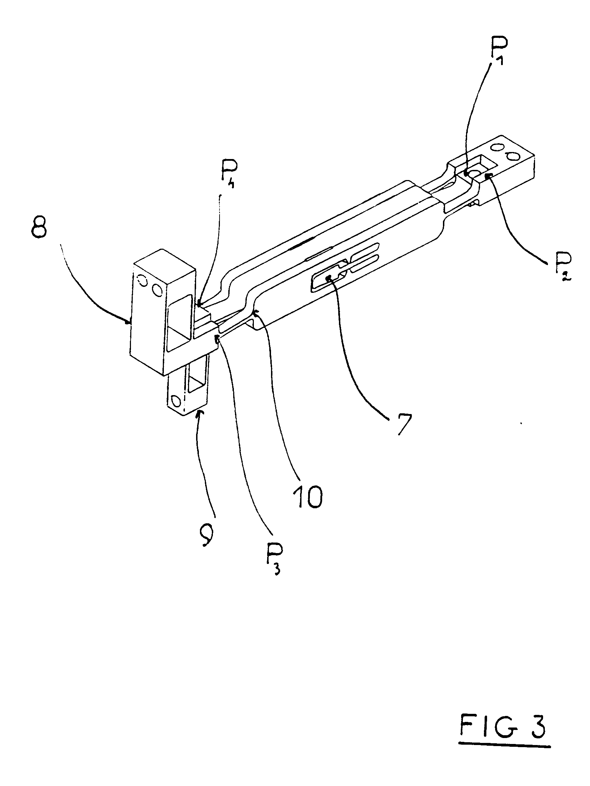

La Fig. 3 montre une vue en trois dimensions du dispositif selon la présente invention et met en évidence la structure compacte d'un tel dispositif. Les parties formant le dispositif sont référencées de la même manière que dans les figures précédentes. Le raccordement (10) des éléments flexibles F₁-F₆ aux parties plus épaisses du dispositif, de préférence, est tel qu'il ne forme pas un angle droit mais, plutôt, une courbure appropriée.

## Revendications

1. Dispositif permettant d'empêcher tout mouvement relatif de translation dans un premier plan entre deux éléments se déplaçant l'un par rapport à l'autre dans un second plan sensiblement perpendiculaire au premier, comprenant deux barres P₁P₄,
P₂P₃ reliées entre elles en leur point milieu par un point de pivot C, les deux dites barres ayant l'une de leurs extrémités solidaire du premier élément en un point de pivot P₁, respectivement, en un point de pivot-glissière P₃, l'autre extrémité des deux dites barres étant solidaire du second élément en un point de pivot P₂ respectivement, en un point de pivot-glissière P₄, lesdits points P₁ et P₂ étant contenus dans ledit premier plan, les barres étant disposées de telle sorte que l'on ait P₁C = P₂C = P₃C = P₄C, le dispositif étant caractérisé en ce que les points de pivot (P₁, P₂, C) ainsi que les points de pivot-glissière (P₃, P₄) sont constitués respectivement de portions flexibles F₁-F₆ desdites barres.

2. Dispositif selon la revendication 1, caractérisé en ce que les deux barres ainsi agencées ne forment qu'une seule pièce.

3. Dispositif selon la revendication 1 ou 2, caractérisé en ce que lesdites barres sont en acier à ressorts.

4. Dispositif selon l'une quelconque des revendication 1 à 3 caractérisé en ce que les points P₃ et P₄ sont également des points de pivot, le mouvement de glissière étant de faible amplitude.

5. Dispositif selon l'une quelconque des revendications 1 à 4 caractérisé en ce que les points de pivot ainsi que les points de pivot-glissière sont constitués de zones de moindre épaisseur pratiquées dans lesdites barres.

## Patentansprüche

1. Querstabilisierte Gelenkführung für zwei relativ zueinander bewegbare Teile mit zwei Gelenkverbindungen P₁P₄ und P₂P₃, die in ihrem Mittelpunkt durch einen Schwenkpunkt C untereinander verbunden sind, wobei jeweils eines der Enden der Verbindungen mit dem ersten Teil in einem Schwenkpunkt P₁ bzw. einem Schwenk-/Schiebepunkt P₃ verbunden ist und das jeweilige andere Ende der beiden Verbindungen mit dem zweiten Teil in einem Schwenkpunkt P₂ bzw. einem Schwenk-/Schiebepunkt P₄ verbunden ist,. wobei sich die Punkte P₁ und P₂ in einer Ebene befinden und die Gelenkverbindungen so angeordnet sind, daß P₁C = P₂C = P₃C = P₄C ist, dadurch gekennzeichnet, daß die Schwenkpunkte (P₁, P₂, C) und die Schwenk-/Schiebepunkte (P₃, P₄) durch flexible Teile F₁ - F₆ der Gelenkverbindungen gebildet sind.

2. Vorrichtung nach Anspruch 1, dadurch gekennzeichnet, daß die Gelenkverbindungen einstückig ausgebildet sind.

3. Vorrichtung nach Anspruch 1 oder 2, dadurch gekennzeichnet, daß die Gelenkverbindungen aus Federstahl bestehen.

4. Vorrichtung nach einem der Ansprüche 1 bis 3, dadurch gekennzeichnet, daß die Punkte P₃ und P₄ auch als Schwenkpunkte fungieren, wobei deren Verschiebungsstrecke relativ kurz ist.

5. Vorrichtung nach einem der Ansprüche 1 bis 4, dadurch gekennzeichnet, daß die Schwenkpunkte und Schwenk-/ Schiebepunkte in den Gelenkverbindungen durch Bereiche verringerten Querschnitts gebildet sind.

## Claims

1. Device for making it possible to prevent any relative translation movement in a first plane between two members movable one in relation to the other in a second plane substantially perpendicular to the first, comprising two linkages, P₁P₄ and P₂P₃, which are connected to each other at their middle point by a pivot point C, said linkages having one of their ends coupled to the first member at a pivot point P₁, respectively, at a pivoting slider point P₃, the other end of the two said linkages being coupled to the second member at a pivot point P₂, respectively, at a pivoting slider point P₄, said points P1 and P2 being included in said first plane, the linkages being arranged so as to give P₁C = P₂C = P₃C = P₄C, the device being characterised in that the pivot points (P₁, P₂, C) and the pivoting slider points (P₃, P₄) are composed of flexible portions, F₁ - F₆ of said linkages.

2. Device according to claim 1, characterised in that the two linkages arranged in this way form only one single piece.

3. Device according to claim 1 or 2, characterised in that said linkages are constructed of spring steel.

4. Device according to any one of claims 1 to 3 characterised in that points P₃ and P₄ also act as pivot points, the sliding movement being of low amplitude.

5. Device according to any of claims 1 to 4 characterized in that said pivot points and pivoting slider points are comprised of lower thickness areas realized in said linkages.
